# EUROPEAN PATENT APPLICATION

(11) **EP 4 231 189 A1**
(43) Date of publication of application: **23.08.2023**
(21) Application number: 22157665.5
(22) Date of filing: 21.02.2022
(51) Int. Cl.: G06F 21/70, H04W 12/04, H04W 12/45, H04W 12/06

(54) **FLEXIBLE AUTHENTICATION**

(71) Applicant: Nokia Technologies Oy, 02610 Espoo (FI)
(72) Inventor: STAUFER, Markus, Munich (DE)
(74) Representative: Nokia EPO representatives

(57) **Abstract**

There is provided an apparatus for authentication with a network, comprising a mobile equipment and a host, which is separate from the mobile equipment. The mobile equipment comprises means for communicating with the network. The host comprises means for providing authentication parameters and an encryption key. Further, the apparatus comprises means for exchanging information between the mobile equipment and the host.

## Description

### FIELD

Various example embodiments relate to a method and an apparatus for performing authentication with a cellular network.

### BACKGROUND

Authentication may be an access authentication, which is performed during initial registration of a UE to a network, is also known as a primary authentication in fifth generation, 5G communication networks. So-called secondary authentication is executed for setting up user plane connections for web services and applications.

In 5G communication networks, Extensible Authentication Protocol, EAP, for authentication and session key distribution uses Authentication and Key Agreement, AKA for public networks. EAP-AKA accomplishes mutual authentication between a user equipment, UE, and the network. EAP-AKA is based on cryptographic keys shared between a UE and its home network. AKA typically runs on a Universal Subscriber Identity Module, USIM of a User Equipment, UE. The USIM comprises a secret cryptographic key or encryption key for authentication. A UE typically communicates with an EAP server in a network in order to authenticate and to generate the session keys.

### SUMMARY

According to some aspects, there is provided the subject-matter of the independent claims. Some example embodiments are defined in the dependent claims. The scope of protection sought for various example embodiments is set out by the independent claims. The example embodiments and features, if any, described in this specification that do not fall under the scope of the independent claims are to be interpreted as examples useful for understanding various example embodiments.

According to a first aspect, there is provided an apparatus for authentication with a network, comprising: a mobile equipment and a host, which is separate from the mobile equipment. The mobile equipment comprises means for communicating with the network. The host comprises means for providing authentication parameters and a cryptographic key. The apparatus further comprises means for exchanging information between the mobile equipment and the host.

According to a second aspect, there is provided a method for authenticating an apparatus with a network, wherein the apparatus comprises a mobile equipment for communicating with the network and a host, which is separate from the mobile equipment. The method comprises providing authentication parameters and a cryptographic key by the host; and exchanging authentication information between the mobile equipment and the host.

According to a third aspect, there is provided a computer program configured to cause a method in accordance with the second aspect to be performed.

According to fourth aspect, there is provided a (non-transitory) computer readable medium comprising program instructions that, when executed by at least one processor, cause an apparatus to at least: to provide authentication parameters and a cryptographic key by a host of the apparatus, which is separate from a mobile equipment of the apparatus configured to communicate with the network; and to exchange authentication information between the mobile equipment and the host.

According to a fifth aspect, there is provided an authentication identification function configured to provide authentication parameters and a response to an authentication message, wherein the authentication identification function is separate from a mobile equipment, which is configured to communicate with a network, and the authentication identification function configured to exchange authentication information with the mobile equipment via a channel.

### BRIEF DESCRIPTION OF THE DRAWINGS

Fig. 1 shows, by way of example, a network architecture of communication system;
Fig. 2 shows, by way of example, a block diagram of an apparatus;
Fig. 3 shows, by way of example, a block diagram of an apparatus;
Fig. 4 shows, by way of example, a block diagram of an apparatus;
Fig. 5 shows, by way of example, signalling between a host and a mobile equipment;
Fig. 6 shows, by way of example, signalling between a mobile equipment and a subscriber identity function;
Fig. 7 shows, by way of example, signalling after completion of an EAP session;
Fig. 8 shows, by way of example, a flow chart of a method for authentication at an apparatus.

Figures may show parts of invention, for example in more detail. Any figures that do not fall under the scope of the claims are supporting better understanding of context and the related technology.

### DETAILED DESCRIPTION

Extensible and flexible authentication is enabled by including - in addition or alternatively to an authentication client on a universal subscriber identity module, USIM, at a cellular module of an UE - an authentication client outside of the cellular module of the UE. In case authentication client is deployed both on the cellular module USIM and outside of the cellular module, authentication may be implemented via either one of the authentication clients, as selected. The authentication client may be deployed - in addition or alternatively to the USIM card - to a host processor of the UE. Communication between the cellular module and the authentication client outside of the cellular module may be protected.

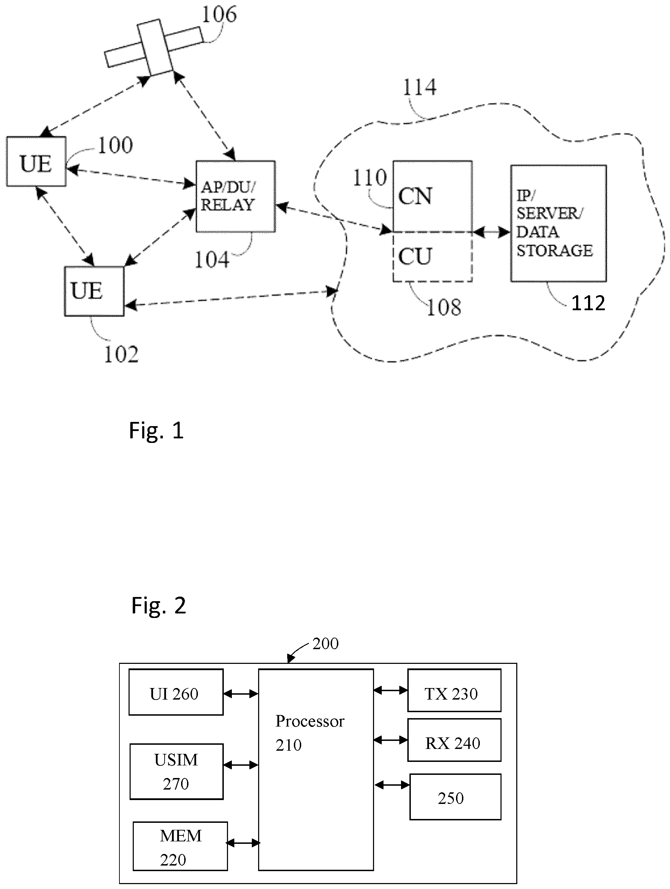

Fig. 1 shows, by way of an example, a network architecture of communication system. In the following, different exemplifying embodiments will be described using, as an example of an access architecture to which the embodiments may be applied, a radio access architecture based on long term evolution advanced, LTE Advanced, LTE-A, or new radio, NR, also known as fifth generation, 5G, without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system, UMTS, radio access network, UTRAN or E-UTRAN, long term evolution, LTE, the same as E-UTRA, wireless local area network, WLAN or WiFi; worldwide interoperability for microwave access, WiMAX; Bluetooth^{®}, personal communications services, PCS ZigBee^{®}, wideband code division multiple access, WCDMA, systems using ultra-wideband, UWB, technology, sensor networks, mobile adhoc networks, MANETs, and Internet Protocol multimedia subsystems, IMS, or any combination thereof.

The example of Fig. 1 shows a part of an exemplifying radio access network. Fig. 1 shows user devices 100 and 102 configured to be in a wireless connection on one or more communication channels in a cell with an access node, such as gNB, i.e. next generation NodeB, or eNB, i.e. evolved NodeB, eNodeB, 104 providing the cell. The physical link from a user device to the network node is called uplink, UL, or reverse link and the physical link from the network node to the user device is called downlink, DL, or forward link. It should be appreciated that network nodes or their functionalities may be implemented by using any node, host, server or access point etc. entity suitable for such a usage. A communications system typically comprises more than one network node in which case the network nodes may also be configured to communicate with one another over links, wired or wireless, designed for the purpose. These links may be used for signalling purposes. The network node is a computing device configured to control the radio resources of the communication system it is coupled to. The network node may also be referred to as a base station, BS, an access point or any other type of interfacing device including a relay station capable of operating in a wireless environment. The network node includes or is coupled to transceivers. From the transceivers of the network node, a connection is provided to an antenna unit that establishes bi-directional radio links to user devices. The antenna unit may comprise a plurality of antennas or antenna elements. The network node is further connected to core network 110, CN, or next generation core NGC. Depending on the system, the counterpart on the CN side can be a serving gateway (S-GW, routing and forwarding user data packets), packet data network gateway (P-GW), for providing connectivity of user devices, UEs, to external packet data networks, or mobile management entity, MME, etc. An example of the network node configured to operate as a relay station is integrated access and backhaul node, IAB. The distributed unit, DU, part of the IAB node performs BS functionalities of the IAB node, while the backhaul connection is carried out by the mobile termination, MT, part of the IAB node. UE functionalities may be carried out by IAB MT, and BS functionalities may be carried out by IAB DU. Network architecture may comprise a parent node, i.e. IAB donor, which may have wired connection with the CN, and wireless connection with the IAB MT.

The user device may be called as a user equipment UE, or a terminal equipment TE, and it may comprise a mobile equipment ME, and a subscriber identification module or function. The user device typically refers to a portable computing device that includes wireless mobile communication devices operating with or without a subscriber identification module, SIM, including, but not limited to, the following types of devices: a mobile station, a mobile phone, smartphone, personal digital assistant, PDA, handset, device using a wireless modem, like alarm or measurement device, etc., laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction.

Additionally, although the apparatuses have been depicted as single entities, different units, processors and/or memory units may be implemented inside these apparatuses, to enable the functioning thereof.

5G enables using multiple input - multiple output, MIMO, technology at both UE and gNB side, many more base stations or nodes than the LTE, a so-called small cell concept, including macro sites operating in co-operation with smaller stations and employing a variety of radio technologies depending on service needs, use cases and/or spectrum available. 5G mobile communications supports a wide range of use cases and related applications including video streaming, virtual reality, extended reality, augmented reality, different ways of data sharing and various forms of machine type applications, such as (massive) machine-type communications, mMTC, including vehicular safety, different sensors and real-time control. 5G is expected to have multiple radio interfaces, namely below 7GHz, cmWave and mmWave, and also being integratable with existing legacy radio access technologies, such as the LTE. Below 7GHz frequency range may be called as FR1, and above 24GHz, or more exactly 24- 52.6 GHz, as FR2, respectively. Integration with the LTE may be implemented, at least in the early phase, as a system, where macro coverage is provided by the LTE and 5G radio interface access comes from small cells by aggregation to the LTE. In other words, 5G is planned to support both inter-RAT operability, such as LTE-5G, and inter-RI operability, inter-radio interface operability, such as below 7GHz - cmWave, below 7GHz - cmWave - mmWave. One of the concepts considered to be used in 5G networks is network slicing in which multiple independent and dedicated virtual sub-networks, or network instances, may be created within the same infrastructure to run services that have different requirements on latency, reliability, throughput and mobility.

The communication system is also able to communicate with other networks, such as a public switched telephone network, PSTN, or the Internet 112, or utilize services provided by them, for example via a server. The communication network may also be able to support the usage of cloud services, for example at least part of core network operations may be carried out as a cloud service, as depicted in Fig. 1 by "cloud" 114. The communication system may also comprise a central control entity, or a like, providing facilities for networks of different operators to cooperate for example in spectrum sharing.

Edge cloud may be brought into radio access network, RAN, by utilizing network function virtualization, NFV, and software defined networking, SDN. Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloud RAN architecture enables RAN real time functions being carried out at the RAN side, in a distributed unit, DU 104, and non-real time functions being carried out in a centralized manner, in a centralized unit, CU 108.

5G may also utilize satellite communication to enhance or complement the coverage of 5G service, for example by providing backhauling. Possible use cases are providing service continuity for machine-to-machine, M2M, or Internet of Things, IoT, devices or for passengers on board of vehicles, or ensuring service availability for critical communications, and future railway/maritime/aeronautical communications. Satellite communication may utilise geostationary earth orbit, GEO, satellite systems, but also low earth orbit, LEO, satellite systems, in particular mega-constellations, systems in which hundreds of (nano)satellites are deployed. Each satellite 106 in the constellation may cover several satellite-enabled network entities that create on-ground cells. The on-ground cells may be created through an on-ground relay node 104 or by a gNB located on-ground or in a satellite.

Fig. 2 shows, by way of example, an apparatus capable of authenticating to a network. Illustrated device 200 may comprise, for example, a mobile communication device such as mobile 100 of Fig. 1. Comprised in device 200 is processor 210, which may comprise, for example, a single- or multi-core processor wherein a single-core processor comprises one processing core and a multi-core processor comprises more than one processing core. Processor 210 may comprise, in general, a control device. Processor 210 may comprise more than one processor. Processor 210 may be a control device. A processing core may comprise, for example, a Cortex-A8 processing core manufactured by ARM Holdings or a Steamroller processing core designed by Advanced Micro Devices Corporation. Processor 210 may comprise at least one Qualcomm Snapdragon and/or Intel Atom processor. Processor 210 may comprise at least one application-specific integrated circuit, ASIC. Processor 210 may comprise at least one field-programmable gate array, FPGA. Processor 210 may be means for performing method steps in device 200. Processor 210 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 200 may comprise memory 220. Memory 220 may comprise random-access memory and/or permanent memory. Memory 220 may comprise at least one RAM chip. Memory 220 may comprise solid-state, magnetic, optical and/or holographic memory, for example. Memory 220 may be at least in part accessible to processor 210. Memory 220 may be at least in part comprised in processor 210. Memory 220 may be means for storing information. Memory 220 may comprise computer instructions that processor 210 is configured to execute. When computer instructions configured to cause processor 210 to perform certain actions are stored in memory 220, and device 200 overall is configured to run under the direction of processor 210 using computer instructions from memory 220, processor 210 and/or its at least one processing core may be considered to be configured to perform said certain actions. Memory 220 may be at least in part external to device 200 but accessible to device 200.

Device 200 may comprise a transmitter 230. Device 200 may comprise a receiver 240. Transmitter 230 and receiver 240 may be configured to transmit and receive, respectively, information in accordance with at least one cellular or non-cellular standard. Transmitter 230 may comprise more than one transmitter. Receiver 240 may comprise more than one receiver. Transmitter 230 and/or receiver 240 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example. Device 200 may comprise a near-field communication, NFC, transceiver 250. NFC transceiver 250 may support at least one NFC technology, such as NFC, Bluetooth, Wibree or similar technologies.

Device 200 may comprise user interface, UI, 260. UI 260 may comprise input and/or output devices. The UI may comprise at least one of a display, a keyboard, a touchscreen, a vibrator arranged to signal to a user by causing device 200 to vibrate, a speaker and a microphone. A user may be able to operate device 200 via UI 260, for example to accept incoming telephone calls, to originate telephone calls or video calls, to browse the Internet, to manage digital files stored in memory 220 or on a cloud accessible via transmitter 230 and receiver 240, or via NFC transceiver 250, and/or to play games.

Device 200 may comprise or be arranged to accept a user identity module 270. User identity module 270 may comprise, for example, a subscriber identity module, SIM, card installable in device 200. A user identity module 270 may comprise information identifying a subscription of a user of device 200. A user identity module 270 may comprise cryptographic information usable to verify the identity of a user of device 200 and/or to facilitate encryption of communicated information and billing of the user of device 200 for communication effected via device 200.

Processor 210 may be furnished with a transmitter arranged to output information from processor 210, via electrical leads internal to device 200, to other devices comprised in device 200. Such a transmitter may comprise a serial bus transmitter arranged to, for example, output information via at least one electrical lead to memory 220 for storage therein. Alternatively to a serial bus, the transmitter may comprise a parallel bus transmitter. Likewise processor 210 may comprise a receiver arranged to receive information in processor 210, via electrical leads internal to device 200, from other devices comprised in device 200. Such a receiver may comprise a serial bus receiver arranged to, for example, receive information via at least one electrical lead from receiver 240 for processing in processor 210. Alternatively to a serial bus, the receiver may comprise a parallel bus receiver.

Device 200 may comprise further devices not illustrated in Fig. 2. For example, where device 200 comprises a smartphone, it may comprise at least one digital camera. Some devices 200 may comprise a back-facing camera and a front-facing camera, wherein the back-facing camera may be intended for digital photography and the front-facing camera for video telephony. Device 200 may comprise a fingerprint sensor arranged to authenticate, at least in part, a user of device 200. In some example embodiments, device 200 lacks at least one device described above. For example, some devices 200 may lack a NFC transceiver 250.

Processor 210, memory 220, transmitter 230, receiver 240, NFC transceiver 250, UI 260 and/or user identity module 270 may be interconnected by electrical leads internal to device 200 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected.

Authentication between the UE and the network is executed via authentication clients. Authentication between the UE and the AUSF of the network may be executed by an Extensible Authentication Protocol, EAP, client functionality that uses Authentication and Key Agreement, AKA. Authentication using the EAP-AKA' algorithm includes execution of a challenge response using a secret encryption key, which is shared with the AUSF of the network. The secret encryption key may be maintained on the USIM of the UE. The EAP framework has been introduced by 3GPP in Release 15. In case of public networks, EAP-AKA' framework and methods have been used.

Authentication and key agreement, AKA, procedures enable mutual authentication between a user equipment, UE, and network. A core network, like 110 of Fig. 1, e.g. 5G core network, may comprise security entities such as authentication server function, AUSF, authentication credential repository and processing function, ARPF, subscription identifier de-concealing function, SIDF, and security anchor function, SEAF. AKA procedures provide keying material that may be used in following security procedures between the UE and the serving network. The keying material generated by the AKA procedure results in an anchor key that may be named as K_{SEAF}. The K_{SEAF} is provided by the authentication server function, AUSF, of the home network to the security anchor function, SEAF, of the serving network. K_{SEAF} is a key seed for a secure channel that the subscriber (UE) and the serving network will eventually establish.

An UE may be configured to initiate or trigger the initial registration procedure, e.g. by using subscription concealed identifier, SUCI, or globally unique temporary identifier, 5G-GUTI, in a registration request, which is sent from the UE to SEAF. The SEAF is configured to invoke an authentication service, e.g. a Nausf UEAuthentication service, by sending an authentication request to the AUSF. The request may comprise, for example, subscription concealed identifier, SUCI, or subscription permanent identifier, SUPI, and the serving network name, SN-name. Upon receiving the authentication request, the AUSF is configured to check whether the requesting SEAF in the serving network is entitled to use the serving network name in the authentication request. The AUSF is configured to send an authentication request, e.g. a Nudm_UEAuthentication_Get request, to unified data management, UDM, function. The request may comprise SUCI or SUPI and the serving network name.

In response to receiving the request, the UDM may be configured to invoke subscription identifier de-concealing function, SIDF, if a SUCI is received. SIDF may de-conceal SUCI to gain SUPI before UDM can process the request. If SUPI is received, or when the SUPI is achieved through de-concealment, the UDM/ARPF (authentication credential repository and processing function, ARPF) may choose the authentication method based on the SUPI.

Let us consider that the EAP-AKA' is selected as the authentication method. Upon receiving a request for authentication material, the home network or home environment is configured to compute an authentication challenge. The AKA challenge comprises a random nonce or number RAND and an authentication token AUTN. AUTN comprises a message authentication code, MAC, that is, an authentication sequence number SQN which may be maintained per user subscription in home environment, HE, and may be incremented by the HE for every authentication procedure. These values may be passed in encrypted form. Universal subscriber identity module, USIM, of the UE may verify based on these values if the challenge is fresh or results in synchronization failure, e.g. due to the values being out of range. It is checked, whether, a received MAC value from AUTN is found to match with generated MAC in USIM. In addition or alternatively, the UE may check that the SQN, i.e. the reference sequence number sent by the network, is in range. The value SQN is maintained by the UE in the USIM, which may be interpreted as the lowest value the UE is willing to accept.

The UE comprises a mobile equipment ME, and a UICC/USIM. The ME may implement an authentication procedure with the network by exchanging EAP message with the network, e.g. EAP request message from the network to the ME, EAP response message from the ME to the network, or EAP success message from the network to the ME. When receiving EAP request message including an authentication challenge the ME may invoke the authenticate procedure on the USIM using parameters received in the EAP request message as input. The USIM is configured to send, as a result of the authenticate procedure, cryptographic or encryption keys to the ME, which are used by the ME as an input to calculate the keys of the 5G key hierarchy.

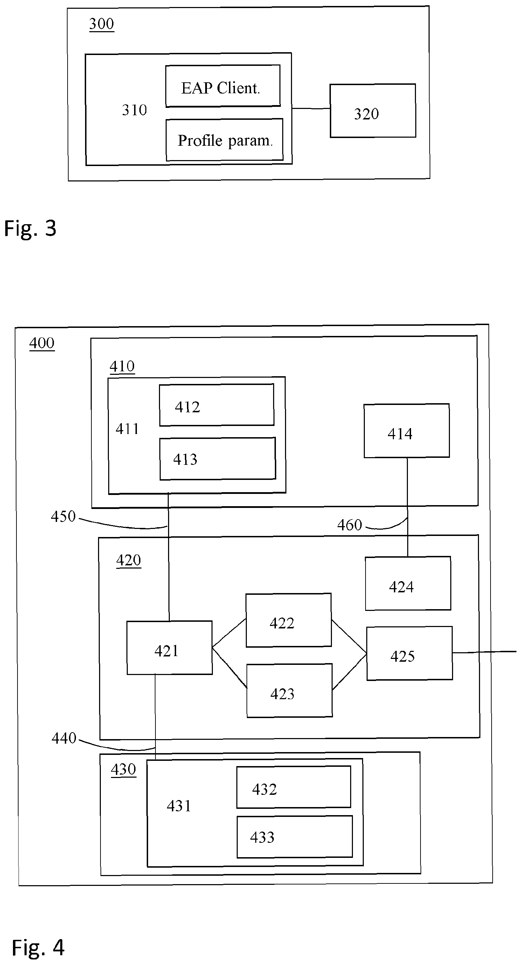

Authentication functionality is handled at a ME. The ME may comprise an authentication client, e.g. an EAP client, which is configured to exchange information with the USIM. The ME and the USIM may exchange information via a local interface, e.g. via cc interface, as specified in ISO 7816. The ME may send authenticate command to the USIM and retrieve other profile parameters from the USIM via the interface. In case the USIM is implemented on a Universal Integrated Circuit Card UICC, the cc interface between the ME and the USIM may be realized using Application Protocol Data Units, APDU, specified in ISO 7816. The UICC may be connected to the UE or ME through a direct galvanic interface. In scope of private networks, 3GPP has enabled possibility to introduce new authentication methods and to deploy authentication clients outside of UICC. To enable such, Fig. 3 illustrates, by way of example, a block diagram of an apparatus.

Fig. 3 shows a UE 300 comprising a ME 320 and an authentication function 310. The authentication function 310 may be implemented as a software application, instead of deployed on a UICC, as a USIM. The authentication function 310 may be called as an Authentication Identification Function AIF, an EAP Identification Function EIF, or a Subscriber Identity Function SIF. The authentication function 310 is arranged to be separate from the UICC/USIM and ME 320, as illustrated in Fig. 3.

The authentication function 310 comprises an authentication client, e.g. an EAP client. This architecture enables deploying the authentication client functionality as part of the authentication function 310, and thus outside of the ME 320. The authentication function 310 may comprise an authentication client, e.g. EAP client, and profile parameters. This enables implementing new authentication methods and/or selecting the authentication method to be used. The authentication function 310 may be additional to USIM authentication. The owner of the authentication identification function has freedom with respect to choice of the authentication method.

Possibility to deploy the authentication function or the authentication identification function on a host processor of an UE enables simple introduction of new provisioning protocols via the authentication identification function. The authentication function or the authentication identification function on the host enables adoption or extension of existing domain specific provisioning protocols. This applies also for the purpose of provisioning the authentication function, EIF.

Fig. 4 illustrates, by way of an example, a block diagram of an apparatus. The apparatus 400 may be a mobile device, for example an industrial device. The apparatus 400 comprises a host 410, a mobile equipment, ME, 420 and a UICC 430. The UICC 430 comprises a USIM application 431, which may be in accordance with 3GPP standards. The USIM 431 may comprise profile parameters 433 and an authentication client 432, like an EAP client, configured to implement the authentication client functionality. The UICC 430 may be replaced by an embedded, eUICC or an integrated, iUICC.

The host 410, or a host data processing unit 410, comprises application part of the apparatus 400. The host 410 is configured to control the ME 420. The ME comprises a cellular module configured to handle connections and communication to the network. The host 410 comprises an authentication identification function AIF 411 and a management agent, Mgmt agent, 414. The AIF 411 comprises an authentication client 412 and profile parameters 413. The AIF 411 may be an EAP identification function, EIF, and the authentication client may be an EAP client.

The UICC 430 is connected to the ME 420 via a local interface 440, e.g. a galvanic interface. On the ME 420, the interface may be terminated by a router 421, e.g. APDU router. The host 410 and the ME 420 are connected with each other using a serial interface, which enables multiplexing different logical channels. A Mgmt agent 414 on the host 410 and a Management server 424 on the ME 420 are configured to communicate via a management channel 460. The AIF 411 on the host 410 is in connection with the router 421 on the ME 420 via a channel 450, called a SIM channel 450. The AIF 411 is able to provide authentication functionality, corresponding to that of a USIM application, via the SIM channel 450. In addition, the AIF 411 is able to provide functionality of an authentication client, e.g. EAP client, via the SIM channel 450.

A Mgmt agent 414 on the host 410 is able to configure a protection mechanism for the SIM channel 450 on the AIF 411. A Mgmt agent 414 is able to configure ME's 420 capabilities related to local or remote flexible authentication. A Mgmt agent 414 is configured to connect to a management server, Mgmt server, 424 on the ME 420 via a management channel 460. The Mgmt agent 414 may be a separate component. The Mgmt agent 414 may be realized as a part of a connection management component, which is responsible for the configuration of a cellular module comprised in the ME 420.

The described device or apparatus comprises or consist of a host and a ME. A cellular module may be a way to implement the ME. A cellular module may be a realization of the ME. A cellular module may implement, represent and/or form the ME

The ME 420 comprises a router 421, e.g. an APDU router, an authentication client 422, e.g. an EAP client, an authentication proxy 423, e.g. an EAP proxy, and a selector 425, e.g. an EAP selector. The ME 420 may comprise a cellular module configured to handle communication to/from a network. The router 421 is configured to exchange information with the UICC 430 and with the AIF 411. Exchange of information may be arranged in form of communication units or packets, for example APDUs. The selector 425 is able to forward messages between the network and the authentication client 422 of the ME 420, and between the network and the authentication proxy 423 of the ME 420. The authentication proxy 423 of the ME 420 is configured to exchange information with an authentication client 412 of the host 410. The authentication client 412 is external to the ME 420. The communication, or exchange of information, may be implemented via a router. For example EPA messages may be forwarded as APDU commands via an APDU router.

A ME may comprise other, additional and/or alternative components compared to those illustrated in Fig. 4. The other, additional and/or alternative components may be configured to exchange messages, or commands and responses, between the ME and the USIM. The possible other, additional and/or alternative components may be configured to invoke a subscriber identification function SIF instead of the USIM. A router, like an APDU router, may be used for invoking the SIF and/or the USIM. Exchange of information between ME and USIM on a UICC, as well as between ME and SIF on the host, may comprise messaging, exchange of messages, exchange of commands, and/or command-response messages. A SIF and a USIM are configured to receive, send, and process the same or similar kind of messages/commands/responses.

Throughout this application a command may include a command message, and a response may include a response message. Exchanging authentication information may include exchanging messages including authentication information.

A SIF is configured to decrypt messages or commands, e.g. APDU commands, received via a SIM channel from a router, e.g. APDU router. The messages or commands may be decrypted using an encryption key of the SIF. The encryption key may be configured by a Mgmt agent, which may be deployed on a host of the UE. The SIF is configured to encrypt messages or responses, e.g. APDU responses, before sending those via SIM channel to a router, which may be deployed on a ME of the UE. A USIM may include an authentication client for performing the authentication client functionality, similarly as a subscriber identification function SIF (or AIF or EIF). A USIM including the authentication client is able to handle messages or commands, like EAP messages encoded in APDU commands, in the same or similar way as a SIF with the exception that messages, or commands and responses, to/from the USIM are not decrypted or encrypted. The USIM is configured to interpret and process incoming messages or commands, e.g. APDU commands, from the router, and to generate responses or response messages, e.g. APDU responses. The messages, commands and responses may relate to retrieval of profile parameters. A SIF and a USIM on a UICC are configured to interpret and process incoming commands and to generate responses in the same or similar way, for example relating to retrieval of profile parameters.

Throughout this application, EAP-AKA' mechanism, as well as any EAP method, may be used for authentication. A new EAP method may be introduced without a need to update the ME. An authentication client may be an EAP client, an authentication proxy may be an EAP proxy, an authentication selector may be an EAP selector. SIF may be called an authentication identification function AIF, or an EAP identification function EIF. The router at the ME may be an APDU router, the commands send from the router to the USIM or to the AIF may be APDU commands, and the responses from the USIM or from the AIF to the router may be APDU responses. However, mechanism might not be tied to any specific signalling or messaging, but any suitable request-response-type of commands, messages or signalling may be used. For a single UE, the USIM and the AIF of the UE use the same type of request-response commands, messages and/or signalling. Encryption and decryption may be implemented at the SIF, and only for the commands/responses/messages to/from the SIF. Encryption and decryption may not be implemented at the USIM, nor for the commands/responses/messages to/from the USIM.

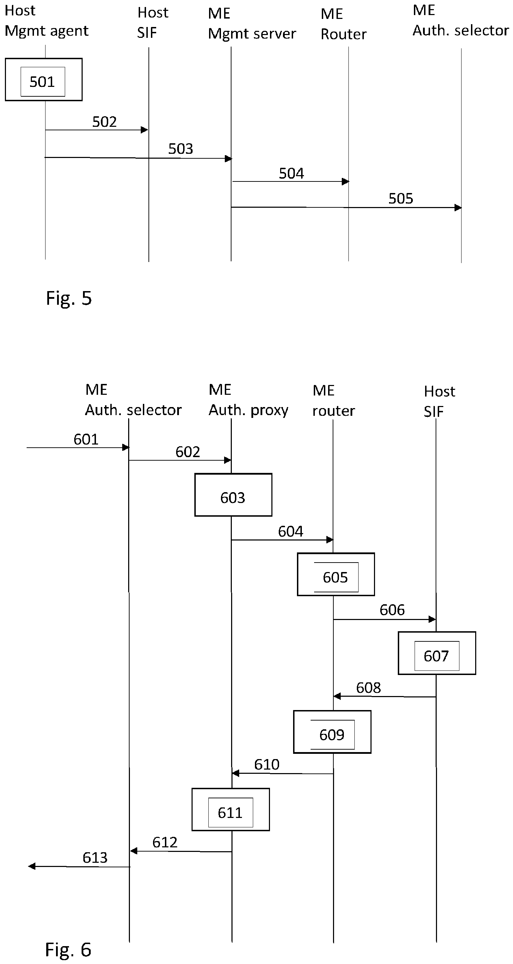

Fig. 5 illustrates, by way of example, signalling in between a host and a mobile equipment, ME. On the vertical axes are disposed, starting from the left, a Mgmt agent 414 on a host 410 of Fig. 4, a SIF 411 on a host 410 of Fig. 4, a Mgmt server 424 on a ME 420 of Fig. 4, a router 421 on a ME 420 of Fig. 4, an Authentication selector 425 on a ME 420 of Fig. 4. Time advances from the top toward the bottom.

The management agent is configured to generate an encryption key, Ks, at phase 501. The encryption key Ks may be a symmetric encryption key. The management agent is configured to send a launch command to the SIF at phase 502. At the same phase 502, the Mgmt agent may configure the same encryption key, Ks, on the SIF. The Mgmt agent may be configured to send commands to the Mgmt server deployed on the ME at phase 503. The commands may include a configure command in order to configure a state of the router at the ME, and a state of the authentication selector at the ME. The state of the router may be local or host. If the state of the router is local, the router is configured to forward authentication commands to the UICC. If the state of the router is host, the router is configured to forward authentication command messages to the SIF. The state of the authentication selector may be module or proxy. If the state of the authentication selector is module, the authentication selector is configured to forward messages received from a network to the authentication client of the ME. If the state of the authentication selector is proxy, the authentication selector is configured to forward authentication messages received form a network to the authentication proxy.

The Mgmt agent of the host may provide encryption key, Ks, to the router via the Mgmt server of the ME. The Mgmt agent may be configured to send the encryption key Ks to the Mgmt server at phase 503. In response to receiving a configure command including the encryption key Ks, the router state and the authentication selector state, the Mgmt server is configured to send a configure command including the router state and the encryption key Ks to the router at phase 504.

In response to receiving a configure command including the encryption key Ks, the router state and the authentication selector state, the Mgmt server is configured to send a configure command including the authentication selector state to the authentication selector at phase 505.

The Mgmt agent may be configured to send commands to the Mgmt server in order to configure the state of the router and the state of the authentication selector. The Mgmt agent may send the encryption key via the Mgmt server to the router. The encryption key Ks may be configured to encrypt a channel between the router and the SIF. The channel between the router and the SIF may be a SIM channel. The management commands exchanged between the Mgmt agent on the host and the Mgmt server on the ME may be implemented using and extending any protocols suitable for configuration of cellular modules. Illustrative, non-limiting examples are ATtention, AT+, commands for software interface for wireless modules, defined in 3GPP TS 27.007.

Fig. 6 shows, by way of example, signalling between a mobile equipment and a subscriber identity function. On the vertical axes are disposed, starting from the left, an authentication selector 425 on the ME 420 of Fig. 4, an authentication proxy 421 on the ME 420 of Fig. 4, an router 421 on the ME 420 of Fig. 4, and a SIF 411 on the host 410 of Fig. 4. Time advances from the top toward the bottom.

At phase 601, the authentication selector receives an authentication message from a network. The state of the authentication selector may be module or proxy. If the current state of the authentication selector is module, the authentication selector is configured to forward any authentication message, received via network interface, transparently to the authentication client. If the current state of the authentication selector is proxy, the authentication selector is configured to forward any authentication message, received via network interface, transparently to the authentication proxy. In Fig. 6 the current state of the authentication selector is proxy. The authentication selector is configured to forward the authentication message, received from the network at phase 601, to the authentication proxy at phase 602.

The authentication proxy is configured to encode the authentication message received form the authentication selector into an encoded communication command or - message at phase 603. For example, a received EAP message may be encoded into an APDU command (message). The authentication proxy is configured to send the encoded communication command to the router at phase 604. The encoding may include defining a new instruction, INS, value for a command, like an APDU command comprising an encoded EAP message.

The state of the router may be local or host. If the state of the router is local, the outer is configured to forward any communication command to the UICC. At the router, a communication command, e.g. an APDU command, may be received from any requestor in the ME. In response to receiving the communication command, the UICC is configured to generate a communication response. At the router, the communication response, like an APDU response, received from the UICC, is configured to be returned to the requestor. If the state of the router is host, the router is configured to encrypt any communication command received from any requestor in the ME and to forward the encrypted communication command to the SIF. In Fig. 6 the current state of the router is host and the router is configured to encrypt the received communication command at phase 605. The communication command may be encrypted using the encryption key Ks. The encrypted communication command is sent to the SIF at phase 606. The encrypted authentication command is sent to the SIF via the SIM channel.

The SIF is configured to handle communication commands or messages, including encoded authentication messages, like EAP messages, at phase 607. In response to receiving the communication command (e.g. APDU command) comprising an authentication message (e.g. EAP msg), the SIF is configured to internally forward the decoded authentication message to the authentication client function of the SIF. The SIF is configured to handle or process the authentication message. The received communication command (e.g. APDU) is decrypted. The authentication message (e.g. EAP msg) is decoded and processed. The authentication response messages (e.g. EAP msgs) are encoded into a response command (e.g. APDU response) and encrypted. Decryption and encryption at phase 607 is done using the encryption key Ks. At phase 608 the encrypted communication command (e.g. APDU) including the authentication response is sent back to the router. The encrypted authentication (e.g. APDU) response is sent via the SIM channel.

The router is configured to decrypt the received communication (e.g. APDU) response at phase 609. The decryption is done using the encryption key Ks. The communication response (e.g. APDU response) is received at the router from the SIF via the SIM channel. The router is configured to send the decrypted communication response (e.g. APDU response) to the authentication proxy at phase 610. The authentication proxy is configured to encode the authentication message (e.g. EAP msg) from the router at phase 611, and to send the authentication (e.g. EAP) message to the authentication selector at phase 612. The authentication selector is configured to return the authentication (e.g. EAP) message to the requestor at phase 613. Cryptographic keys, like Ks, are used for encryption and decryption. The encryption and decryption procedures may include counters or other means in order to ensure data integrity between the SIF and the router.

If the authentication proxy received the last authentication communication response (e.g. APDU) related to a completed authentication (e.g. EAP) session, the authentication proxy is configured to send a notification to the authentication selector. The notification may include indication of success or failure of the execution of the authentication (e.g. EAP) session. In case of a successful execution of the authentication (e.g. EAP) session, the notification may include encryption keys, like 5G keys, if the authentication proxy received the 5G encryption keys as part of the last authentication communication response (e.g. APDU response).

Fig. 6 illustrates a simplified flow of an authentication message through the ME, when the state of the authentication selector is proxy and the state of the router is host. The illustrated authentication message may be an EAP message, the authentication selector may be an EAP selector and the router may be an APDU router. In such case, for example, the SIF, after receiving an APDU command, may send an APDU response to the EAP proxy, which sent the APDU command, informing that the APDU command has been completed successfully and a result is available. Subsequently, the EAP proxy will receive the actual result in response to a Get Result APDU command. All mechanisms specific to the APDU protocol are not presented in full detail.

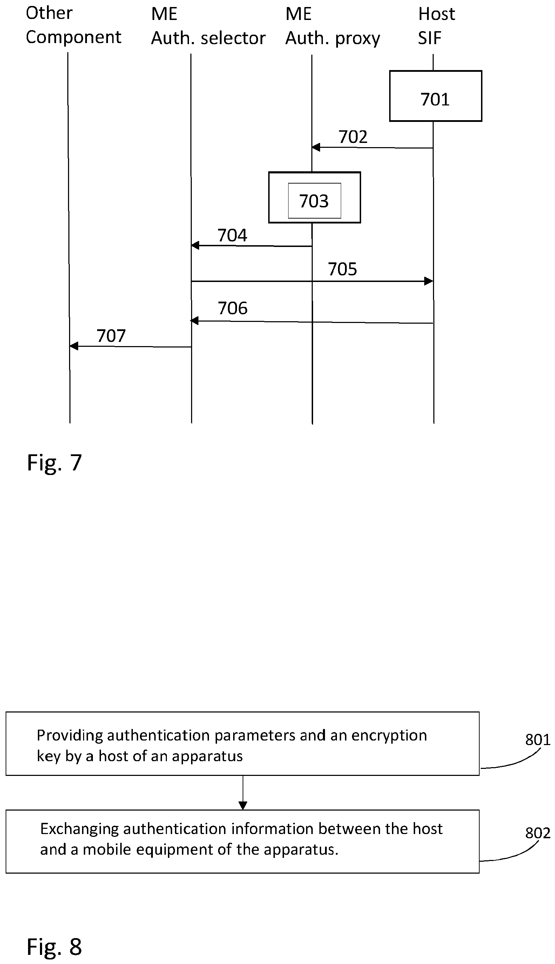

Fig. 7 shows, by way of example, signalling after completion of an EAP session. On the vertical axes are disposed, starting from the left, an other component, an authentication selector 425 on the ME 420 of Fig. 4, an authentication proxy 421 on the ME 420 of Fig. 4, and a SIF 411 on the host 410 of Fig. 4. Time advances from the top toward the bottom.

At phase 701, an authentication session, like an EAP session, has been successfully completed. After successful completion of the authentication session, the SIF is configured to calculate a root key or keys of the 5G key hierarchy. The keys may be subsequently accessed by the ME using communication (e.g. APDU) commands, at phases 705, 706. Alternatively, the keys could be included in the communication (e.g. APDU) response containing authentication session complete notification at phase 702.

After completion of the authentication session, the SIF is configured to send an communication (e.g. APDU) response at phase 702. The communication response is sent to the authentication proxy on the ME. The communication response includes authentication session complete notification. The notification may include an indication on whether the authentication session was successful.

The authentication proxy is configured to unwrap the authentication session complete notification from the received communication (e.g. APDU) response at phase 703. The EAP proxy is configured to send an authentication session complete notification to the authentication selector at phase 704.

If encryption keys are not included in the authentication session complete notification from the authentication proxy, the authentication selector may retrieve the encryption keys from the SIF or from the USIM. The authentication selector is configured to send an authentication communication (e.g. APDU) command for reading encryption keys to the SIF at phase 705. In response, at phase 706, the SIF is configured to send an authentication communication (e.g. APDU) response containing the encryption keys to the authentication selector. The encryption keys may be retrieved by sending suitable authentication communication commands to the router. The encryption keys may be added to messages to other components. The encryption keys may be sent to an other component with an authentication session complete notification at phase 707. Alternatively, also the other component may retrieve the encryption keys form the SIF or the USIM by sending suitable communication (e.g. APDU) commands to the router after having received the authentication session complete notification from the authentication selector without the encryption keys.

Fig. 7 illustrates signalling after the completion of the authentication session, which may be an EAP session. Fig. 7 illustrates the case, where encryption keys, like 5G keys, are not included in the communication (e.g. APDU) response containing the authentication (e.g. EAP) session complete notification. In Fig. 7 the authentication selector is configured to obtain the encryption keys from the SIF. For simplicity, the router, which is configured to send the authentication communication commands, is omitted form the Fig. 7. The SIF may not directly send a result, without a request from an authentication selector. For example, the EAP selector may be configured to send an APDU Get Response command for this purpose.

The authentication communication commands and responses exchanged via the router may be encrypted or not encrypted. APDU may be used as a command structure between the ME, the USIM and the SIF, as illustrated, by way of an example, in the previous. However, any other protocol or communication units providing a command and response structure may be utilized.

SIM operations, like cryptographic operations based on authentication keys, may be handled similarly by an authentication identification function, AIF. A ME, or a router at a ME, is configured to exchange information similarly with a SIM and with the AIF. The router enables transferring messages for authentication to SIM and to AIF, one at the time. At the ME authentication messages may be exchanged with, and the authentication operations performed at, either the SIM or the AIF. A communication channel is established between the AIF and the ME. A single cellular module forming an ME is able to support both USIM/UICC as well as AIF based authentication architecture. This provides extensible and flexible authentication for cellular UEs. An operator, like an industrial network operator, is able to use either traditional USIM/UICC approach or new authentication methods with an authentication client, like EAP client, implemented outside of the cellular module, or the ME. An authentication is enabled without a traditional SIM, or alternatively with the traditional SIM.

An authentication may be performed without a USIM. An alternative to authentication by USIM is provided. This may be utilized in industrial devices, in IoT environments, or in any network entities corresponding to a UE of the description. Cellular modules without a user identity module are enabled.

Fig. 8 is a flow graph of a method for authentication at an apparatus. Method comprises providing authentication parameters and an encryption key by a host of an apparatus at phase 801. Method comprises exchanging authentication information between the host and a mobile equipment of the apparatus at phase 802. The method may comprise exchanging authentication information via encryption channel, which may be encrypted using the encryption key. The apparatus may comprise the mobile equipment and separate host. Further method phases are clear form the presented signalling Figs. 5-7. The phases of the illustrated method may be performed in device 110, an auxiliary device, an industrial device or a modem, for example, or in a control device configured to control the functioning thereof, when installed therein.

## Claims

1. An apparatus for authentication with a network, comprising:
- a mobile equipment and a host, which is separate from the mobile equipment;
∘ wherein the mobile equipment comprises means for communicating with the network;
∘ wherein the host comprises means for providing authentication parameters and an encryption key; and
- means for exchanging authentication information between the mobile equipment and the host.

2. An apparatus according to claim 1, further comprising a user identity module for providing authentication parameters and an encryption key, wherein the user identity module is configured to exchange authentication information with the mobile equipment, and wherein authentication information exchanged between the user identity module and the mobile equipment is in the same or similar form than the authentication information exchanged between the mobile equipment and the host.

3. Apparatus according to any one of the previous claims, wherein means for exchanging authentication information between the mobile equipment and the host comprises a channel encrypted using the encryption key.

4. An apparatus according to any one of previous claims, wherein the host comprises an authentication identification function configured to at least one of the following:
- configured to receive a communication unit from the mobile equipment;
- configured to decode the received communication unit into an authentication message;
- configured to forward the authentication message to an authentication client of the authentication identification function, which is configured to generate a response message based on the authentication message;
- configured to encode the response message, received from the authentication client of the authentication identification function, into a communication unit; and
- configured to send the communication unit including the encoded response message back to mobile equipment.

5. The apparatus according to any one of the pervious claims, wherein the host comprises an authentication identification function configured to decrypt communication units received from the mobile equipment and to encrypt communication units before sending the communication units back to the mobile equipment.

6. An apparatus according to any one of previous claims, wherein the mobile equipment comprises at least one of:
- an authentication selector, an authentication client and an authentication proxy, wherein the authentication selector is configured to forward authentication messages received from the network either to an authentication client of the mobile equipment, or to an authentication proxy of the mobile equipment; and
- an authentication router configured to forward the authentication messages either to the user identity module of the universal integrated circuit card, or to authentication identification function of the host.

7. An apparatus according to claim 6, wherein
- the authentication selector is configured to forward an authentication message either to an authentication client of the mobile equipment, or to an authentication proxy of the mobile equipment based on its current state; and
- the authentication router is configured the forward an authentication message either to the user identity module of the universal integrated circuit card, or to authentication identification function of the host based on its current state.

8. An apparatus according to claim 7, wherein the host comprises a management agent
- configured to generate an encryption key and configured to set a state of the authenticator selector and a state of the authentication router;
- configured to send the encryption key to the authentication identification function of the host; and
- configured to send the encryption key and the state of the authenticator selector and the state of the authentication router to the mobile equipment, wherein the encryption key and the state of the authentication router are configured to be forwarded to the router; and the state of the authenticator selector is configured to be forwarded to the authentication selector.

9. An apparatus according to any one of previous claims, wherein the authentication identification function is configured to, in response to a completed authentication session, prepare a response including the authentication session complete notification; and optionally to calculate one or more cryptographic keys for network communication.

10. The apparatus according to any one of preceding claim, wherein the means comprises at least one processor; and at least one memory including computer program code, the at least one memory and the computer program code configured to, with the at least one processor, cause the performance of the apparatus.

11. A method for authenticating an apparatus with a network, wherein the apparatus comprises a mobile equipment for communicating with the network and a host, which is separate from the mobile equipment, the method comprising:
- providing authentication parameters and an encryption key by the host; and
- exchanging authentication information between the mobile equipment and the host.

12. An authentication identification function configured to provide authentication parameters and a response to an authentication message, wherein the authentication identification function is separate from a mobile equipment, which is configured to communicate with a network, and the authentication identification function configured to exchange authentication information with the mobile equipment via a channel.

13. An authentication identification function according to claim 12, wherein the channel is encrypted using an encryption key.

14. A computer readable medium comprising program instructions that, when executed by at least one processor, cause an apparatus to at least:
- to provide authentication parameters and an encryption key by a host of the apparatus, which is separate from a mobile equipment of the apparatus configured to communicate with the network; and
- to exchange authentication information between the mobile equipment and the host.

15. A computer program configured to cause a method in accordance with claim 11 to be performed.
